# EUROPEAN PATENT APPLICATION

(11) **EP 4 699 819 A1**
(43) Date of publication of application: **25.02.2026**
(21) Application number: 25190784.6
(22) Date of filing: 21.07.2025
(51) Int. Cl.: B60C 11/04, B60C 11/12

(54) **HEAVY DUTY TIRE**

(30) Priority: 21.08.2024 JP 2024139776
(71) Applicant: Sumitomo Rubber Industries, Ltd., Kobe-shi, Hyogo 651-0072 (JP)
(72) Inventor: NAKAMURA, MIKA, Kobe-shi, 651-0072 (JP)
(74) Representative: Manitz Finsterwald Patent- und Rechtsanwaltspartnerschaft mbB

(57) **Abstract**

A tire 2 includes a tread 4. The tread 4 includes a plurality of land portions 16 separated by a circumferential main groove 10. At least one of the land portions 16 includes a first narrow land portion 28a and a second narrow land portion 28b separated by a circumferential sub groove 26. A top 32 of the first narrow land portion 28a includes a serration 46 having irregularities and a land 48 having no irregularities. The serration 46 is located between a width center of the first narrow land portion 28a and a first edge 30a of the first narrow land portion 28a. The serration 46 includes a plurality of ridges 50. A narrow shallow groove 56 is located between the two adjacent ridges 50 of the plurality of ridges 50.

## Description

### CROSS REFERENCE TO RELATED APPLICATIONS

This application claims priority based on Japanese Patent Application No. 2024-139776 filed in Japan on August 21, 2024, the entire content of which is incorporated herein by reference.

### TECHNICAL FIELD

The present invention relates to a heavy duty tire.

### BACKGROUND ART

A tread includes a plurality of land portions separated by a circumferential main groove. In order to improve traveling performance (wet performance) on a wet road surface, sipes and narrow grooves are engraved on the land portions. The sipes and the narrow grooves decrease a stiffness of each of the land portions. There is a risk that the decrease in stiffness causes a decrease in wear resistance. Various studies have been conducted for achieving both wet performance and wear resistance.

Japanese Laid-Open Patent Publication No. 2021-054294 (Patent Literature 1) proposes that a crown land portion is provided with a crown lateral groove crossing the crown land portion in order to improve uneven wear resistance of the crown land portion while maintaining wet performance.

### SUMMARY OF THE INVENTION

### [TECHNICAL PROBLEM]

An object of the present invention is to provide a heavy duty tire capable of improving wear resistance while suppressing a decrease in wet performance.

### [SOLUTION TO PROBLEM]

A heavy duty tire according to the present invention includes a tread located on a radially outermost side and extending in a circumferential direction. The tread includes a plurality of land portions separated by a circumferential main groove. At least one of the land portions includes a first narrow land portion and a second narrow land portion separated by a circumferential sub groove. Of two edges of each of the first narrow land portion and the second narrow land portion, an edge on a side of the circumferential sub groove is a first edge and an edge on another side is a second edge. A top of the first narrow land portion includes a serration having irregularities and a land having no irregularities, The serration is located between a width center of the first narrow land portion and the first edge of the first narrow land portion, The serration includes a plurality of ridges. A narrow shallow groove is located between two adjacent ridges of the plurality of ridges.

### [ADVANTAGEOUS EFFECTS OF THE INVENTION]

According to the present invention, it is possible to obtain a heavy duty tire capable of achieving improvement in wear resistance while suppressing a decrease in wet performance.

### BRIEF DESCRIPTION OF DRAWINGS

FIG. 1 is a development view showing a part of a tread of a heavy duty tire according to one embodiment of the present invention,
FIG. 2 is a cross-sectional view taken along line II-II of FIG. 1,
FIG. 3 is a cross-sectional view taken along line III-III of FIG. 1,
FIG. 4 is a developed view showing a part of FIG. 1,
FIG. 5 is a cross-sectional view taken along line V-V of FIG. 4,
FIG. 6 is a development view showing a modification of a serration,
FIG. 7 is a development view showing a modification of a land portion provided with the serration,
FIG. 8 is a development view showing another modification of the land portion provided with the serration,
FIG. 9 is a cross-sectional view taken along line IX-IX of FIG. 8, and
FIG. 10 is a cross-sectional view showing a modification of a widthwise sipe.

### DETAILED DESCRIPTION

Hereinafter, the present invention will be described in detail on the basis of preferred embodiments with reference to the drawings as appropriate.

A tire of the present invention is fitted on a rim. An inside of the tire is filled with air, and an internal pressure of the tire is adjusted. The tire fitted on the rim is also called a tire-rim assembly. The tire-rim assembly includes the rim and the tire fitted on the rim.

In the present invention, a state in which the tire is fitted on a normal rim, the internal pressure of the tire is adjusted to a normal internal pressure, and no load is applied to the tire is referred to as a normal state.

In the present invention, unless otherwise specified, dimensions and angles of each portion of the tire are measured in the normal state.

Dimensions and angles of each portion in a meridian cross-section of the tire, which cannot be measured in a state where the tire is fitted on the normal rim, are measured in a cut surface of the tire obtained by cutting the tire along a flat surface including a rotation axis. In this measurement, the tire is set such that a distance between left and right beads matches a distance between beads in the tire fitted on the normal rim. Note that a configuration of the tire that cannot be confirmed in the state where the tire is fitted on the normal rim is confirmed in the above-described cut surface.

The normal rim means a rim defined in a standard on which the tire relies. A "standard rim" in the JATMA standard, a "Design Rim" in the TRA standard, and a "Measuring Rim" in the ETRTO standard are normal rims.

The normal internal pressure means an internal pressure defined in a standard on which the tire relies. A "maximum air pressure" in the JATMA standard, a "maximum value" described in "TIRE LOAD LIMITS AT VARIOUS COLD INFLATION PRESSURES" in the TRA standard, and an "INFLATION PRESSURE" in the ETRTO standard are normal internal pressures.

A normal load means a load defined in a standard on which the tire relies. A "maximum load capacity " in the JATMA standard, a "maximum value" stated in "TIRE LOAD LIMITS AT VARIOUS COLD INFLATION PRESSURES" in the TRA standard, and a "LOAD CAPACITY" in the ETRTO standard are normal loads.

In the present invention, a tread portion of the tire is a portion of the tire that is in contact with a road surface. A bead portion is a portion of the tire fitted to the rim. A sidewall portion is a portion of the tire that bridges between the tread portion and the bead portion. The tire includes the tread portion, a pair of bead portions, and a pair of sidewall portions as portions thereof.

### [Knowledge underlying the present invention]

As described above, a tread includes a plurality of land portions separated by circumferential main grooves. If a number of circumferential main grooves engraved in the tread is reduced and a number of land portions included in the tread is reduced, a volume per one land portion is increased. In this case, the tire can increase a stiffness of each of the land portions. The increase in stiffness of the land portion can contribute to improvement in wear resistance.

If the number of circumferential main grooves engraved in the tread is reduced, a drainage performance of the tire is decreased. In order to improve wet performance while suppressing a decrease in stiffness of the land portion, for example, circumferential narrow grooves are provided in the land portion.

A ground-contact pressure of the tire tends to be lower near a center of the land portion and higher near edges of the land portion. This ground-contact pressure distribution acts disadvantageously on the wet performance and the wear resistance. There is a risk that increasing the stiffness of the land portion and providing the circumferential narrow grooves in the land portion do not sufficiently contribute to both the wet performance and the wear resistance. In other words, if the ground-contact pressure distribution of the land portion can be formed by a uniform distribution without bias, it is expected that the wet performance and the wear resistance of the tire can be further improved.

Therefore, the present inventors have conducted intensive studies in order to establish a technique capable of achieving improvement in wear resistance while suppressing a decrease in wet performance, and have completed the present invention described below.

### [Overview of embodiments of the present invention]

The present invention is directed to a heavy duty tire including a tread located on a radially outermost side and extending in a circumferential direction, wherein the tread includes a plurality of land portions separated by a circumferential main groove, at least one of the land portions includes a first narrow land portion and a second narrow land portion separated by a circumferential sub groove, of two edges of each of the first narrow land portion and the second narrow land portion, an edge on a side of the circumferential sub groove is a first edge and an edge on another side is a second edge, a top of the first narrow land portion includes a serration having irregularities and a land having no irregularities, the serration is located between a width center of the first narrow land portion and the first edge of the first narrow land portion, the serration includes a plurality of ridges, and a narrow shallow groove is located between two adjacent ridges of the plurality of ridges.

The heavy duty tire of the present invention can achieve improvement in wear resistance while suppressing a decrease in wet performance. Although a mechanism by which such an effect is exhibited has not been clarified, it can be inferred as follows.

The top of at least one of the two narrow land portions separated by the circumferential sub groove includes the serration. The serration reduces a contact area. The serration is located near the circumferential sub groove. A ground-contact area in the vicinity of a center of the land portion decreases. The ground-contact pressure in the vicinity of the center of the land portion increases. The ground-contact pressure in the vicinity of the edges of the land portion relatively decreases. As a result, a ground-contact pressure distribution of the land portion is formed by a uniform distribution without bias. In this tire, increasing a stiffness of the land portion by increasing a volume and providing the circumferential sub groove in the land portion can effectively contribute to both the wet performance and the wear resistance. The tire can improve the wear resistance while suppressing the decrease in the wet performance.

Preferably, the serration includes a plurality of serration portions arranged in the circumferential direction, and each of the plurality of serration portions includes the plurality of ridges. In this case, the serration can contribute to forming the ground-contact pressure distribution of the land portion by a uniform distribution without bias. The tire can improve the wear resistance while suppressing the decrease in the wet performance.

Preferably, the first narrow land portion includes a plurality of widthwise sipes extending from the second edge of the first narrow land portion toward the first edge of the first narrow land portion, the plurality of widthwise sipes are arranged in the circumferential direction, a portion between two adjacent widthwise sipes is a block, and the block includes one of the serration portions. In this case, each of the widthwise sipes functions as an edge component. The tire can improve the wet performance. The widthwise sipes influence the stiffness of the land portion, and the serration contributes to forming the ground-contact pressure distribution of the land portion by a uniform distribution without bias. The tire can maintain good wear resistance. The tire can improve the wear resistance while suppressing the decrease in the wet performance.

Preferably, a top of each of the first narrow land portion and the second narrow land portion includes the serration and the land, in the first narrow land portion, the serration is located between the width center of the first narrow land portion and the first edge of the first narrow land portion, in the second narrow land portion, the serration is located between a width center of the second narrow land portion and the first edge of the second narrow land portion, and the serration of each of the first narrow land portion and the second narrow land portion includes the plurality of ridges. In this case, the top of each of the two narrow land portions separated by the circumferential sub groove includes the serration. The ground-contact pressure in the vicinity of the center of the land portion increases. The ground-contact pressure in the vicinity of the edges of the land portion relatively decreases. As a result, a ground-contact pressure distribution of the land portion is formed by a uniform distribution without bias. The tire can improve the wear resistance while suppressing the decrease in the wet performance.

Preferably, the serration of each of the first narrow land portion and the second narrow land portion includes the plurality of serration portions arranged in the circumferential direction, each of the plurality of serration portions includes the plurality of ridges, and the serration portion of the first narrow land portion and the serration portion of the second narrow land portion are alternately arranged in the circumferential direction. In this case, the serration can contribute to forming the ground-contact pressure distribution of the land portion by a uniform distribution without bias. The tire can improve the wear resistance while suppressing the decrease in the wet performance.

Preferably, the serration of each of the first narrow land portion and the second narrow land portion includes a plurality of serration portions arranged in the circumferential direction, each of the plurality of serration portions includes the plurality of ridges, each of the first narrow land portion and the second narrow land portion includes a plurality of widthwise sipes extending from the second edge of each of the first narrow land portion and the second narrow land portion toward the first edge of each of the first narrow land portion and the second narrow land portion, and in each of the first narrow land portion and the second narrow land portion, a portion between two adjacent widthwise sipes is a block, and the block includes one of the serration portions. In this case, each of the widthwise sipes functions as an edge component. The tire can improve the wet performance. While the widthwise sipes influence the stiffness of the land portion, the serration contributes to forming the ground-contact pressure distribution of the land portion by a uniform distribution without bias. The tire can maintain good wear resistance. The tire can improve the wear resistance while suppressing the decrease in the wet performance.

Preferably, the plurality of widthwise sipes of the first narrow land portion and the plurality of widthwise sipes of the second narrow land portion are arranged in a staggered manner in the circumferential direction. In this case, the serration portions and the widthwise sipes can effectively contribute to suppressing the decrease in wet performance and improving the wear resistance. The tire can effectively improve the wear resistance while effectively suppressing the decrease in wet performance.

Preferably, a ratio of a groove depth of each of the widthwise sipes to a groove depth of the circumferential main groove is not less than 70% and not greater than 90%. In this case, the widthwise sipes can sufficiently exhibit its function until the tire reaches an end state of wear requiring replacement. The tire can maintain good wet performance. A decrease in stiffness of the land portion due to the widthwise sipes is suppressed. This tire can also maintain good wear resistance.

Preferably, each of the widthwise sipes extends in a zigzag in a length direction and a depth direction. In this case, a pair of wall surfaces of the widthwise sipe effectively mesh with each other. Deformation of the narrow land portion is effectively suppressed. The widthwise sipe can effectively contribute to the improvement of the wear resistance.

Preferably, the circumferential sub groove is located at a center of the land portion. In this case, the ground-contact pressure in the vicinity of the center of the land portion increases, and the ground-contact pressure in the vicinity of the edges of the land portion relatively decreases. As a result, a ground-contact pressure distribution of the land portion is formed by a uniform distribution without bias. The tire can improve the wear resistance while suppressing the decrease in the wet performance.

Preferably, a ratio of a groove depth of the circumferential sub groove to a groove depth of the circumferential main groove is not less than 70% and not greater than 90%. In this case, the circumferential sub groove can sufficiently exert its function until the tire reaches an end state of wear requiring replacement. The tire can maintain good wet performance. Since a decrease in stiffness of the land portion due to the circumferential sub groove is suppressed, the tire can also maintain good wear resistance.

Preferably, the narrow shallow groove is connected to the circumferential sub groove at an end on a side of the circumferential sub groove. In this case, the narrow shallow groove promotes discharge of water existing between the tire and a road surface. The serration can effectively contribute to improvement in drainage performance of the tire. The tire can improve the wet performance.

Preferably, a position of a top of each of the plurality of ridges coincides with a position of the land in a radial direction, or the top of each of the plurality the ridges is located on a radially inner side of the land. In this case, an excessive increase in ground-contact pressure in the serration is suppressed. The ground-contact pressure distribution of the land portion is formed by a uniform distribution without bias. The tire can improve the wear resistance while suppressing the decrease in the wet performance.

In a heavy duty tire, a portion between two shoulder land portions, in other words, a crown portion tends to have a high ground-contact pressure and is easily worn. A ground-contact length of the crown portion is long, and water tends to be retained in the crown portion. Therefore, in the heavy duty tire of the present invention, in order to achieve both good wet performance and good wear resistance, a main land portion located between the two shoulder land portions is preferably tuned as described below.

Preferably, of the plurality of land portions, two land portions located on an axially outermost side are shoulder land portions, and a land portion located between the two shoulder land portions is a main land portion, and at least one of the main land portions includes the first narrow land portion and the second narrow land portion separated by the circumferential sub groove. In this case, a ground-contact pressure in the vicinity of a center of the main land portion increases, and a ground-contact pressures in the vicinity of edges of the main land portion relatively decrease. As a result, a ground-contact pressure distribution of the main land portion is formed by a uniform distribution without bias. The tire can improve the wear resistance while suppressing the decrease in the wet performance.

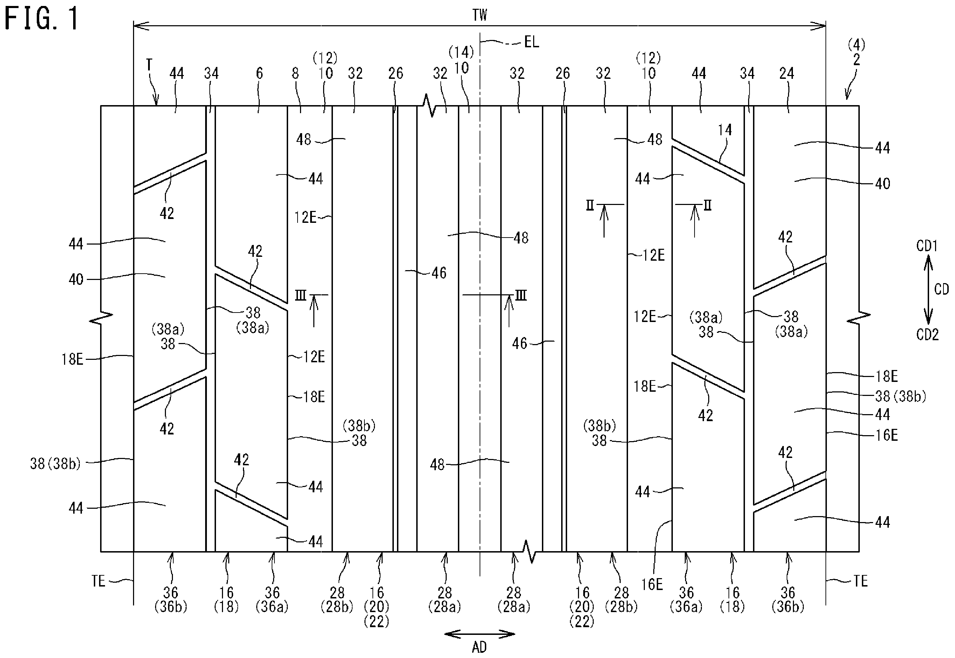

As described above, according to the present invention, it is possible to obtain a heavy duty tire capable of achieving improvement in wear resistance while suppressing a decrease in wet performance. This will be described in detail below by taking a heavy duty tire 2 (hereinafter also referred to simply as "tire 2") shown in FIG. 1 as an example.

### [Details of the embodiments of the present invention]

FIG. 1 is a plan view in which a part of a tread 4 of the tire 2 according to one embodiment of the present invention is developed. The tire 2 is mounted on a vehicle such as a truck or a bus.

A direction indicated by a double-headed arrow AD is an axial direction of the tire 2. The axial direction of the tire 2 means a direction parallel to a rotation axis of the tire 2. A direction indicated by a double-headed arrow CD is a circumferential direction of the tire 2. The circumferential direction of the tire 2 coincides with a rotation direction of the tire 2. A direction perpendicular to a paper surface of FIG. 1 is a radial direction of the tire 2. An alternate long and short dash line EL extending in the circumferential direction represents an equator plane of the tire 2.

In the axial direction, a direction away from the equator plane is an axially outer side of the tire 2, and a direction approaching the equator plane is an axially inner side of the tire 2. A direction indicated by an arrow CD1 is a first circumferential direction side of the tire 2, and a direction indicated by an arrow CD2 is a second circumferential direction side of the tire 2.

The tire 2 includes the tread 4. The tread 4 is one of elements configuring an internal structure of the tire 2. In the present invention, the internal structure of the tire 2 is not particularly limited. Although not described in detail, the tire 2 has a general internal structure as an internal structure of a heavy duty tire.

The tread 4 is formed from crosslinked rubber. The tread 4 is located on a radially outermost side of the tire 2. The tread 4 extends in the circumferential direction. The tread 4 has a tread surface 6. The tire 2 is in contact with a road surface on the tread surface 6. Grooves 8 are engraved on the tread 4. Thus, a tread pattern is formed.

The tread pattern shown in FIG. 1 is an example of the tread pattern formed on the tread 4 of the tire 2 of the present invention. The tread pattern shown in FIG. 1 is a tread pattern of a new tire 2, which is not worn.

A point of intersection of the tread surface 6 and the equator plane is an equator. When one of the grooves 8 is located on the equator plane, the equator is identified on the basis of a virtual tread surface obtained assuming that there is no groove 8 on the equator plane.

Solid lines TE extending in the circumferential direction represent ends of the tread surface 6. In the tire, when the end of the tread surface cannot be identified from the appearance, a position, on the outer surface of the tire, corresponding to an axially outer end of a ground-contact surface obtained when a normal load is applied to the tire in a normal state and the tire is brought into contact with a flat surface with a camber angle being set to 0°, is used as the end of the tread surface.

A length indicated by a double-headed arrow TW in FIG. 1 is a width of the tread 4. The width TW of the tread 4 is an axial distance from one end TE to another end TE of the tread surface 6. The width TW of the tread 4 is measured along the tread surface 6.

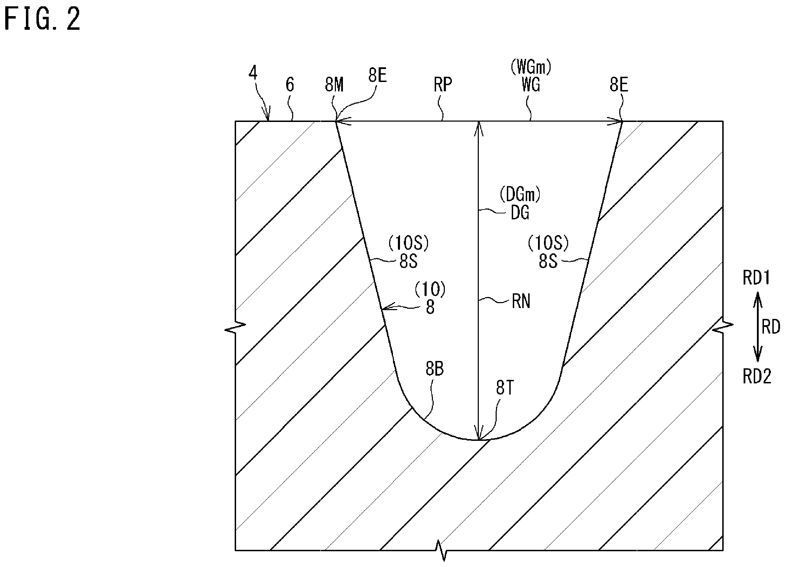

FIG. 2 shows a cross-section of the groove 8. A direction indicated by a double-headed arrow RD is the radial direction of the tire 2. A side indicated by an arrow RD1 is a radially outer side of the tire 2, and a side indicated by an arrow RD2 is a radially inner side of the tire 2. In the present invention, the cross-section of the groove 8 is represented by a cross-section along a flat surface perpendicular to a length direction of the groove 8.

The cross-section of the groove 8 shown in FIG. 2 is a cross-section of a center circumferential main groove to be described later. A main constitution of the groove 8 will be described on the basis of the cross-section of the center circumferential main groove.

The groove 8 has a pair of wall surfaces 8S including a groove opening 8M and a bottom surface 8B including a groove bottom 8T.

Unless otherwise specified, the groove bottom 8T is represented by a position at which a distance from a reference surface RP to the bottom surface 8B is maximum, which is measured along a normal line of the reference surface RP with a flat surface including a pair of edges 8E constituting the groove opening 8M as the reference surface RP. When the bottom surface 8B is a flat surface, the groove bottom 8T is represented by a center position of the bottom surface 8B. When a protrusion is provided on the bottom surface 8B, the groove bottom 8T is specified on the basis of a virtual bottom surface obtained on the assumption that there is no protrusion.

The normal line of the reference surface RP connecting the reference surface RP and the groove bottom 8T is a reference normal line RN, and a direction of the reference normal line RN is a depth direction of the groove 8.

A groove width of the groove 8 is represented by a distance (hereinafter, an inter-wall surface distance) between the one wall surface 8S and the other wall surface 8S. The inter-wall surface distance is measured along a line orthogonal to the reference normal line RN unless otherwise specified. When a profile of the tread surface 6 can be confirmed, the groove bottom 8T and the groove width may be specified using the profile of the tread surface 6 as the reference surface RP.

In FIG. 2, a length indicated by a double-headed arrow WG is the groove width of the groove 8 at the groove opening 8M. When a portion of the groove opening 8M of the groove 8 is processed in a tapered manner, the groove width of the groove opening 8M of the groove 8 is represented on the basis of a virtual edge obtained assuming that the portion is not processed in a tapered manner. A length indicated by a double-headed arrow DG is a groove depth of the groove 8. The groove depth DG of the groove 8 is represented by a distance from the reference surface RP to the groove bottom 8T of the groove 8 measured along the reference normal line RN unless otherwise specified. A position of the groove 8, the groove width WG, and the groove depth DG are appropriately determined in accordance with specifications of the tire 2.

The groove 8 having a groove width WG of less than 1.0 mm at the groove opening 8M is called a sipe. The groove 8 other than the sipe is called an ordinary groove. The ordinary groove has a groove width WG of not less than 1.0 mm at the groove opening 8M.

The sipe may include a portion (hereinafter, an ordinary groove corresponding portion) having a groove width of not less than 1.0 mm between the groove opening 8M and the groove bottom 8T. In this case, the tread 4 is worn to expose the ordinary groove corresponding portion, so that the sipe is switched to the ordinary groove.

The ordinary groove may include a portion having a groove width less than 1.0 mm (a sipe corresponding portion) between the groove opening 8M and the groove bottom 8T. In this case, the tread 4 is worn to expose the sipe corresponding portion, so that the ordinary groove is switched to the sipe.

The ordinary groove having a narrow groove width and having a pair of wall surfaces that can come into contact with each other when the tire comes into contact with the road surface is also called a narrow groove. The ordinary groove having a wide groove width and having a pair of wall surfaces that do not come into contact with each other even when the tire is in contact with the road surface is also called a main groove.

The tread 4 includes circumferential main grooves 10. Each of the circumferential main grooves 10 extends continuously in the circumferential direction. The circumferential main groove 10 is the main groove described above. The circumferential main groove 10 has a wide groove width. A pair of wall surfaces 10S of the circumferential main groove 10 does not come into contact with each other when the tread 4 of the tire 2 comes into contact with the road surface and is deformed.

A groove depth DGm of the circumferential main groove 10 is, for example, not less than 8 mm and not greater than 21 mm. From the viewpoint that the tire 2 can exhibit good wet performance, the groove depth DGm is preferably not less than 13 mm and not greater than 18 mm. The groove width WGm of the circumferential main groove 10 is preferably not less than 4.0% and not greater than 10% of the width TW of the tread 4.

As shown in FIG. 1, the plurality of circumferential main grooves 10 arranged in the axial direction are engraved in the tread 4 of the tire 2. The tread 4 includes the plurality of circumferential main grooves 10 arranged in the axial direction.

In the present invention, when the tread has the plurality of circumferential main grooves arranged in the axial direction, two circumferential main grooves located on an axially outermost side of the circumferential main grooves are shoulder circumferential main grooves. The circumferential main groove located on the equator plane is the center circumferential main groove. When there is no circumferential main groove on the equator plane, of the circumferential main grooves located in a zone between the equator plane and each of the ends of the tread surface, the circumferential main groove closest to the equator plane is the center circumferential main groove. When the circumferential main groove is located between the center circumferential main groove and the shoulder circumferential main groove, the circumferential main groove located between the center circumferential main groove and each of the shoulder circumferential main grooves is a middle circumferential main groove.

The tread 4 of the tire 2 includes three circumferential main grooves 10. Of the three circumferential main grooves 10, the circumferential main grooves 10 located on the axially outermost side are shoulder circumferential main grooves 12. The circumferential main groove 10 located on the equator plane is a center circumferential main groove 14. The tread 4 has the center circumferential main groove 14 and the pair of shoulder circumferential main grooves 12.

In a tread portion T of the tire 2, a portion between the two shoulder circumferential main grooves 12 is also referred to as a crown portion, and an axially outer portion of each of the shoulder circumferential main grooves 12 is also referred to as a shoulder portion.

In the present invention, when a groove depth of the center circumferential main groove 14 is different from a groove depth of each of the shoulder circumferential main grooves 12, the groove depth of the center circumferential main groove 14 is used as the groove depth DGm of the circumferential main grooves 10.

As described above, the tread 4 includes the plurality of circumferential main grooves 10. The plurality of circumferential main grooves 10 constitute a plurality of land portions 16 in the tread 4. The tread 4 includes the plurality of land portions 16 separated by the circumferential main grooves 10.

In the present invention, two land portions located on the axially outermost side of the plurality of land portions formed in the tread are shoulder land portions. The land portion located between the two shoulder land portions is a main land portion. The tread of the present invention includes the two shoulder land portions and at least one main land portion.

When a number of main land portions located between the two shoulder land portions is one, this one main land portion is a crown land portion. When a plurality of main land portions are provided between the two shoulder land portions and the plurality of main land portions include a main land portion located on the equator plane, the main land portion located on the equator plane is the crown land portion. When there is no main land portion located on the equator plane, the main land portion closest to the equator plane of the main land portions located between the equator plane and the shoulder land portions is the crown land portion.

When the main land portion is located next to the crown land portion, the main land portion located next to the crown land portion is a middle land portion.

The tread 4 of the tire 2 includes the four land portions 16. The four land portions 16 are disposed symmetrically with respect to the equator plane. Of the four land portions 16, the two land portions 16 located on the axially outermost side are shoulder land portions 18. Each of the shoulder land portions 18 includes each of the ends TE of the tread surface 6. The two land portions 16 located between the two shoulder land portions 18 are main land portions 20. In the case of the tire 2, each of the two main land portions 20 is the main land portion 20 closest to the equator plane of the main land portions 20 located between the equator plane and the shoulder land portions 18, and thus is also referred to as a crown land portion 22.

The tread 4 includes the two shoulder land portions 18 and the two main land portions 20 located between the two shoulder land portions 18.

A width of each of the land portions 16 formed in the tread 4 is represented by an axial distance from one edge 16E to another edge 16E of the land portion 16, and is equal to an axial width of a top 24 of the land portion 16. When the width of the land portion 16 changes in the circumferential direction, the width of the land portion 16 is represented by an average of a maximum value and a minimum value of the width. The width of the land portion 16 formed in the tread 4 is appropriately determined in consideration of the specifications of the tire 2.

As described above, the tread 4 includes the plurality of land portions 16. Of the plurality of land portions 16, at least one land portion 16 includes a circumferential sub groove 26.

In the tread 4 shown in FIG. 1, each of the two main land portions 20 located between the two shoulder land portions 18 includes one circumferential sub groove 26. Only one of the main land portions 20 may include the circumferential sub groove 26, and not the main land portion 20 but each of the shoulder land portions 18 may include the circumferential sub groove 26. All of the four land portions 16 provided in the tread 4 may include the circumferential sub grooves 26.

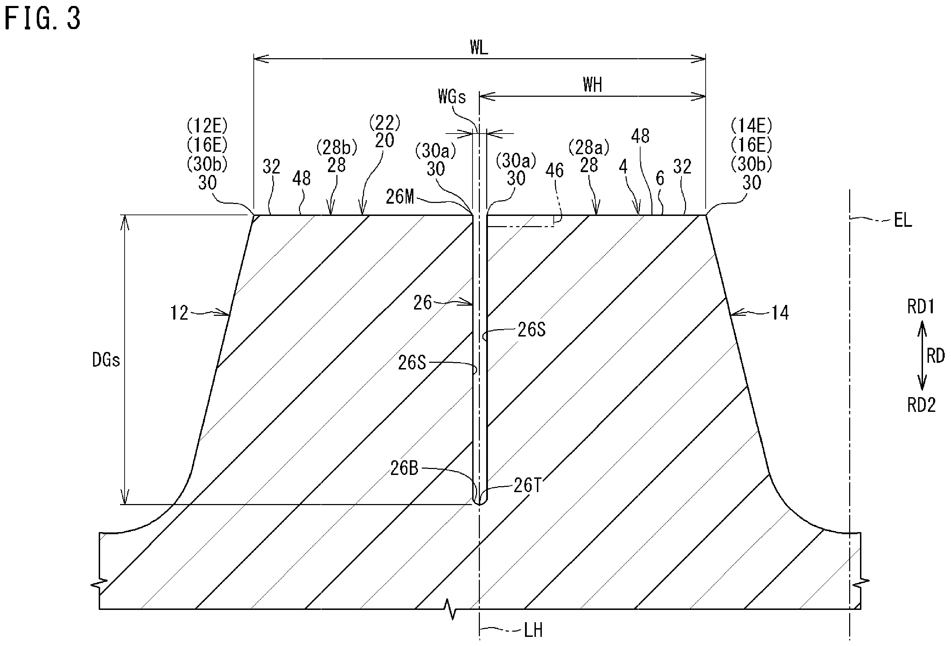

FIG. 3 shows a cross-section of one of the circumferential sub grooves 26. FIG. 3 shows a cross-sectional view of the circumferential sub groove 26 provided in one of the main land portions 20 (particularly, the crown land portions 22).

The circumferential sub groove 26 extends straight in a depth direction. The circumferential sub groove 26 has a pair of wall surfaces 26S including a groove opening 26M and a bottom surface 26B including a groove bottom 26T.

In FIG. 3, a double-headed arrow WGs is a groove width of the circumferential sub groove 26 at the groove opening 26M. A double-headed arrow DGs is a groove depth of the circumferential sub groove 26. A double-headed arrow WL indicates the width of the land portion 16 (that is, the crown land portion 22) having the circumferential sub groove 26.

The circumferential sub groove 26 has the groove width WGs narrower than the groove width WGm of each of the circumferential main grooves 10. The groove width WGs of the circumferential sub groove 26 of FIG. 3 is not greater than 2.0 mm. This circumferential sub groove 26 may be the above-described sipe or the above-described narrow groove. The pair of wall surfaces 26S of the circumferential sub groove 26 comes into contact with each other when the land portion 16 of the tread 4 comes into contact with the road surface and is deformed. As a result, two narrow land portions described later support each other.

A ratio WGs/WL of the groove width WGs of the circumferential sub groove 26 to the width WL of the land portion 16 is preferably not greater than 5%. As a result, an influence of the circumferential sub groove 26 on a stiffness of the land portion 16 is suppressed. The land portion 16 has an appropriate stiffness. The tire 2 can improve wear resistance. From this viewpoint, the ratio WGs/WL is more preferably not greater than 4%.

The ratio WGs/WL is preferably not less than 2%. As a result, the circumferential sub groove 26 can contribute to drainage. The tire 2 can maintain good wet performance. From this viewpoint, the ratio WGs/WL is more preferably not less than 3%.

The ratio DGs/DGm of the groove depth DGs of the circumferential sub groove 26 to the groove depth DGm of the circumferential main groove 10 is preferably not less than 70% and not greater than 90%.

By setting the ratio DGs/DGm to not less than 70%, the circumferential sub groove 26 can sufficiently exhibit a function thereof until the tire 2 reaches an end state of wear in which replacement with a new tire 2 is necessary. The tire 2 can suppress a decrease in wet performance. From this viewpoint, the ratio DGs/DGm is more preferably not less than 75%.

By setting the ratio DGs/DGm to not greater than 90%, an influence of the circumferential sub groove 26 on the stiffness of the land portion 16 is suppressed. The land portion 16 has an appropriate stiffness. The tire 2 can improve the wear resistance. From this viewpoint, the ratio DGs/DGm is more preferably not greater than 80%.

In FIG. 3, an alternate long and short dash line LH is a center line of the circumferential sub groove 26. A double-headed arrow WH is an axial distance from one of the edge 16E of the land portion 16 to the center line LH of the circumferential sub groove 26.

The ratio WH/WL of the axial distance WH from the edge 16E of the land portion 16 to the center line LH of the circumferential sub groove 26 to the width WL of the land portion 16 is preferably not less than 40% and not greater than 60%. As a result, a difference in stiffness between a first narrow land portion 28a located on one side of the circumferential sub groove 26 and a second narrow land portion 28b located on another side thereof is appropriately maintained. Unspecific deformation in the land portion 16 is suppressed. Occurrence of uneven wear is suppressed. The tire 2 can improve wear resistance while improving drainage performance by providing the circumferential sub grooves 26. From this viewpoint, the ratio WH/WL is more preferably not less than 45% and not greater than 55%. It is particularly preferable that the ratio WH/WL is 50%, that is, the circumferential sub groove 26 is located at the center of the land portion 16.

The circumferential sub groove 26 forms the two narrow land portions 28 in the land portion 16. The land portion 16 includes the two narrow land portions 28 separated by the circumferential sub groove 26. In this specification, for convenience of description, the narrow land portion 28 on the equator plane side is represented as the first narrow land portion 28a, and the narrow land portion 28 on the other side is represented as the second narrow land portion 28b. The first narrow land portion means one of the two narrow land portions formed in the land portion, and the second narrow land portion means the other narrow land portion. Therefore, the narrow land portion 28 on an equator plane side may be represented as the second narrow land portion 28b, and the narrow land portion 28 on the other side may be represented as the first narrow land portion 28a.

In the tire 2, at least one land portion 16 of the plurality of land portions 16 formed in the tread 4 includes the first narrow land portion 28a and the second narrow land portion 28b separated by the circumferential sub groove 26. Of two edges 30 of each of the first narrow land portion 28a and the second narrow land portion 28b, the edge 30 on a side of the circumferential sub groove 26 is a first edge 30a, and the edge 30 on the other side is a second edge 30b.

The edges 30 of the narrow land portion 28 are also ends of a top 32 of the narrow land portion 28. The second edge 30b of the first narrow land portion 28a is the edge 16E on the equator plane side of the land portion 16, and the second edge 30b of the second narrow land portion 28b is the edge 16E on the other side of the land portion 16. The second edge 30b of the first narrow land portion 28a is also an edge 14E of the center circumferential main groove 14, and the second edge 30b of the second narrow land portion 28b is also an edge 12E of the shoulder circumferential main groove 12.

As shown in FIG. 1, each of the shoulder land portions 18 of the tire 2 includes a circumferential shallow groove 34. Although not described in detail, a groove width of the circumferential shallow groove 34 is wider than the groove width of the circumferential sub groove 26 and narrower than the groove width of the circumferential main groove 10. The circumferential shallow groove 34 is shallower than the circumferential sub groove 26 and the circumferential main groove 10.

The circumferential shallow groove 34 extends continuously in the circumferential direction. The circumferential shallow groove 34 forms two shoulder narrow land portions 36 in each of the shoulder land portions 18. For convenience of description, of the two shoulder narrow land portions 36, the shoulder narrow land portion 36 on the equator plane side is referred to as a first shoulder narrow land portion 36a, and the shoulder narrow land portion 36 on the other side is referred to as a second shoulder narrow land portion 36b.

Of two edges 38 of each of the first shoulder narrow land portion 36a and the second shoulder narrow land portion 36b, the edge 38 on a side of the circumferential shallow groove 34 is a first edge 38a, and the edge 38 on another side is a second edge 38b.

The edges 38 of the shoulder narrow land portions 36 are also ends of a top 40 of the shoulder narrow land portions 36. The second edge 38b of the first shoulder narrow land portion 36a is the edge 18E on the equator plane side of the shoulder land portion 18 and is also an edge 12E of the shoulder circumferential main groove 12. The second edge 38b of the second shoulder narrow land portion 36b is the edge 18E on another side of the shoulder land portion 18 and is also the end TE of the tread surface 6.

In each of the first shoulder narrow land portion 36a and the second shoulder narrow land portion 36b, a plurality of widthwise shallow grooves 42 arranged in the circumferential direction are engraved. Each of the widthwise shallow grooves 42 has a groove width and a groove depth substantially equal to the groove width and the groove depth of the circumferential shallow groove 34. The widthwise shallow grooves 42 of the first shoulder narrow land portion 36a bridge between the circumferential shallow groove 34 and the shoulder circumferential main groove 12. The widthwise shallow grooves 42 of the second shoulder narrow land portion 36b bridge between the circumferential shallow groove 34 and the end TE of the tread surface 6.

The widthwise shallow grooves 42 form a plurality of shoulder blocks 44 arranged in the circumferential direction in each of the first shoulder narrow land portion 36a and the second shoulder narrow land portion 36b. As shown in FIG. 1, the shoulder blocks 44 of the first shoulder narrow land portion 36a and the shoulder blocks 44 of the second shoulder narrow land portion 36b are alternately arranged in the circumferential direction.

In the tread pattern shown in FIG. 1, a top 32 of each of the first narrow land portions 28a includes a serration 46 and a land 48. A top 32 of each of the second narrow land portions 28b includes the land 48. The top 32 of the second narrow land portion 28b is constituted by the land 48.

As will be described later, the serration 46 is provided with a plurality of ridges. The serration 46 is formed of an undulating surface. On the other hand, the land 48 is formed of a flat surface. Although not described in detail, in a meridian cross-section of the tire 2, a contour of the land 48 coincides with a contour of the tread surface 6. The meridian cross-section is a cross-section of the tire 2 along a flat surface including the rotation axis of the tire 2.

The top 32 of the first narrow land portion 28a includes the serration 46 having irregularities and the land 48 having no irregularities.

In the tire 2, it is sufficient that the top 32 of one of the two narrow land portions 28 formed in the land portion 16 has the serration 46. Instead of the top 32 of the first narrow land portion 28a, the top 32 of the second narrow land portion 28b may include the serration 46 and the land 48. The top 32 of each of the first narrow land portion 28a and the second narrow land portion 28b may include the serration 46 and the land 48.

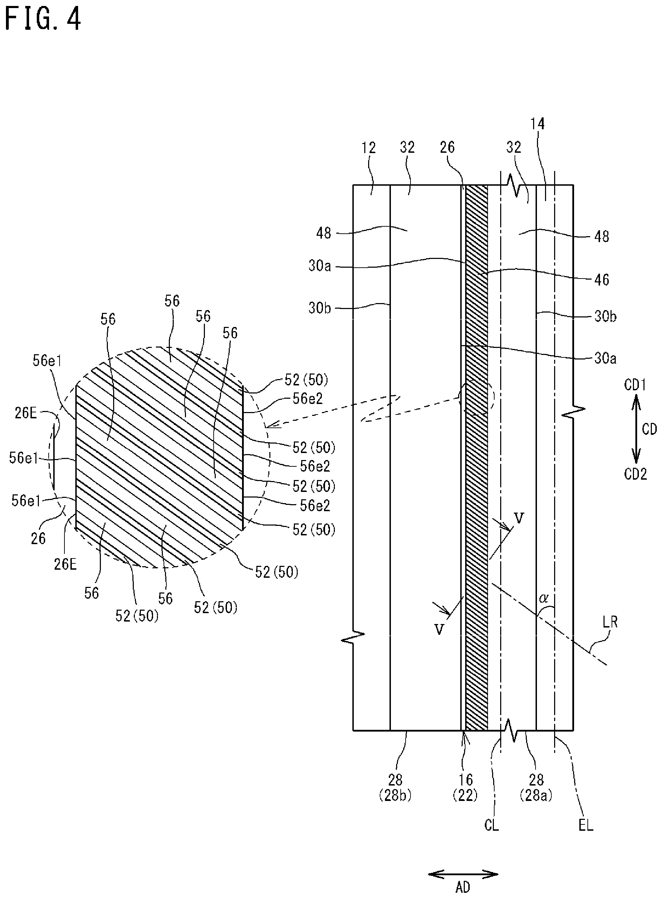

FIG. 4 shows a part of a development view of FIG. 1. In FIG. 4, an alternate long and short dash line CL represents a width center of the narrow land portion 28.

The serration 46 extends in the circumferential direction. The serration 46 has a uniform width in the circumferential direction. As shown in FIG. 4, the serration 46 of the narrow land portion 28 is located between the width center CL of the narrow land portion 28 and the first edge 30a of the narrow land portion 28.

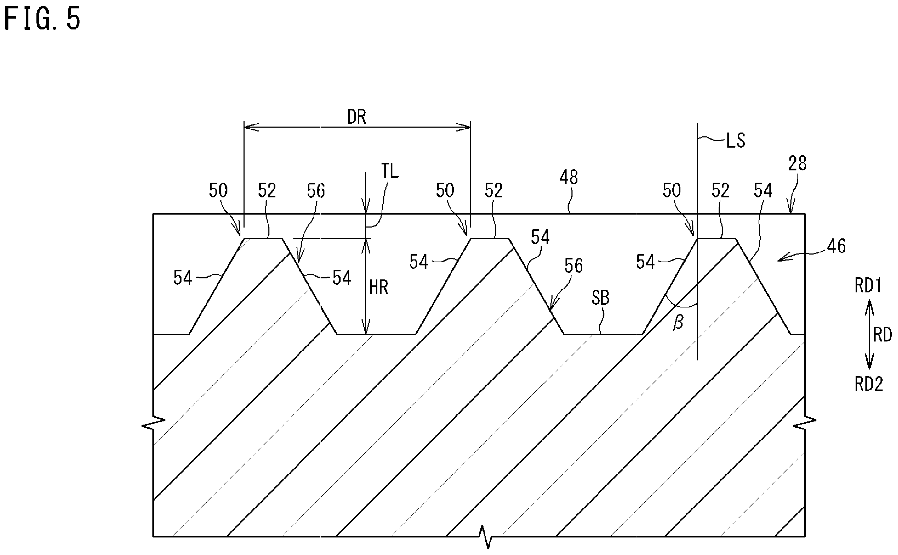

FIG. 5 shows a cross-section of the serration 46.

The serration 46 includes a plurality of ridges 50. Each of the ridges 50 is a protrusion protruding from a reference surface SB of the serration 46 and having a constant length. The ridge 50 extends in a length direction thereof. The cross-section of the serration 46 shown in FIG. 5 is a cross-section of the serration 46 along a flat surface perpendicular to the length direction of the ridges 50.

Each of the ridges 50 tapers from the reference surface SB toward a top 52 of the ridge 50. The ridge 50 has the top 52 and a pair of side surfaces 54 bridging between the top 52 and the reference surface SB. Thick solid lines drawn in the serration 46 in FIG. 4 represent the tops 52 of the ridges 50. The ridges 50 extend straight.

In the serration 46, the plurality of ridges 50 are disposed at predetermined intervals. As shown in FIG. 5, a groove is formed between two adjacent ridges 50. In the tire 2, the groove formed between the two adjacent ridges 50 is called a narrow shallow groove. In the serration 46, a narrow shallow groove is located between two adjacent ridges of the plurality of ridges. The serration 46 includes the plurality of ridges 50 in parallel. The plurality of narrow shallow grooves 56 are formed in the serration 46. The above-described reference surface SB is a bottom surface of each of the narrow shallow grooves 56. The side surfaces 54 of the ridge 50 are wall surfaces of the narrow shallow groove 56. As shown in FIG. 4, an end of the narrow shallow groove 56 on the circumferential sub groove 26 side is referred to as a first end 56e1 of the narrow shallow groove 56, and an end of the narrow shallow groove 56 on another side is referred to as a second end 56e2 of the narrow shallow groove 56. The narrow shallow groove 56 extends straight from the first end 56e1 toward the second end 56e2.

In the tire 2, the top 32 of at least one of the two narrow land portions 28 separated by the circumferential sub groove 26 has the serration 46. The serration 46 includes the plurality of narrow shallow grooves 56 in parallel. The serration 46 is formed of a surface having irregularities. A bottom surface SB of the narrow shallow groove 56 does not come into contact with the road surface. The serration 46 reduces a contact area of the narrow land portion 28.

As described above, the serration 46 is located between the width center CL of the narrow land portion 28 and the first edge 30a of the narrow land portion 28. The serration 46 is located near the circumferential sub groove 26. By providing the serration 46, a contact area in the vicinity of a center of the land portion 16 is reduced. A ground-contact pressure in the vicinity of the center of the land portion 16 increases, and the ground-contact pressure in the vicinity of the edges 16E of the land portion 16 relatively decreases. As a result, a ground-contact pressure distribution of the land portion 16 is formed by a uniform distribution without bias. Increasing a volume of the land portion 16 to increase the stiffness of the land portion 16 in order to improve the wear resistance, and providing the circumferential sub groove 26 in the land portion 16 in order to improve the wet performance, which is decreased due to the increase in the volume of the land portion 16, can effectively contribute to achieving both the wet performance and the wear resistance of the tire 2. The tire 2 can improve the wear resistance while suppressing the decrease in the wet performance.

As described above, the serration 46 is located between the width center CL of the narrow land portion 28 and the first edge 30a of the narrow land portion 28. Of the first end 56e1 and the second end 56e2 of the narrow shallow groove 56, the second end 56e2 located on a width center CL side is located in the narrow land portion 28. On the other hand, a position of the first end 56e1 located on a first edge 30a side, in other words, a position of the end 56e1 of the narrow shallow groove 56 on a circumferential sub groove 26 side coincides with the position of an edge 26E of the circumferential sub groove 26. In other words, the narrow and shallow groove 56 is connected to the circumferential sub groove 26 at the end on the circumferential sub groove 26 side. As a result, the narrow shallow groove 56 promotes discharge of water existing between the tire 2 and the road surface. The serration 46 can effectively contribute to improvement in drainage performance of the tire 2. The tire 2 can improve the wet performance.

From this viewpoint, the narrow shallow groove 56 is preferably connected to the circumferential sub groove 26 at the end on the circumferential sub groove 26 side.

In FIG. 4, an alternate long and short dash line LR is a center line of the ridge 50 and represents a direction in which the ridge 50 extends. The center line of the ridge 50 intersects the equator plane. In other words, the ridge 50 is inclined with respect to the circumferential direction. An angle α is an angle formed by the center line LR of the ridge 50 and the alternate long and short dash line EL representing the equator plane. The angle α is an angle formed by the ridge 50 with respect to the circumferential direction. The angle α is also referred to as an inclination angle of the ridge 50.

The inclination angle α of the ridge 50 is preferably not less than 30 degrees and not greater than 90 degrees. As a result, by providing the plurality of ridges 50, the narrow shallow grooves 56 formed in the serration 46 can effectively contribute to the improvement of the drainage performance of the tire 2. The ridge 50 can effectively function as an edge component. The tire 2 can improve the wet performance. From this viewpoint, the inclination angle α of the ridge 50 is more preferably not less than 45 degrees and not greater than 90 degrees.

In FIG. 5, a double-headed arrow HR is a height of the ridge 50. The height HR of the ridge 50 is also a groove depth of the shallow narrow groove 56. A double-headed arrow DR is an interval between the adjacent ridges 50. The interval DR is also referred to as a pitch of the ridges 50.

The height HR of the ridge 50 is preferably not less than 0.1 mm and not greater than 2.5 mm.

By setting the height HR of the ridge 50 to not less than 0.1 mm, the serration 46 can contribute to forming the ground-contact pressure distribution of the land portion 16 by a uniform distribution without bias, and improving the drainage performance of the tire 2. The tire 2 can maintain good wet performance. From this viewpoint, the height HR is more preferably not less than 0.3 mm, still more preferably not less than 0.5 mm.

By setting the height HR of the ridge 50 to not greater than 2.5 mm, a stiffness of the ridge 50 is appropriately maintained. The serration 46 is prevented from serving as a starting point of wear. The tire 2 can improve the wear resistance. From this viewpoint, the height HR is more preferably not greater than 2.0 mm, still more preferably not greater than 1.5 mm.

The interval DR between the adjacent ridges 50 is preferably not less than 0.5 mm and not greater than 1.5 mm.

By setting the interval DR to not less than 0.5 mm, the serration 46 can contribute to forming the ground-contact pressure distribution of the land portion 16 by a uniform distribution without bias and improving the drainage performance of the tire 2. The tire 2 can maintain good wet performance. From this viewpoint, the interval DR is more preferably not less than 0.8 mm.

By setting the interval DR to not greater than 1.5 mm, stress concentration on the ridge 50 is suppressed. The serration 46 is prevented from serving as a starting point of wear. The tire 2 can improve the wear resistance. From this viewpoint, the interval DR is more preferably not greater than 1.3 mm.

In FIG. 5, a solid line LS indicates a height direction of the ridge 50. The height direction of the ridge 50 coincides with a depth direction of the narrow shallow groove 56. An angle β is an angle formed by each of the side surfaces 54 of the ridge 50 and the solid line LS. The angle β is an angle formed by the side surface 54 of the ridge 50 with respect to the height direction of the ridge 50, and is also referred to as an inclination angle of the side surface 54.

The inclination angle β of the side surface 54 is preferably not less than 15 degrees and not greater than 50 degrees.

By setting the inclination angle β of the side surface 54 to not less than 15 degrees, the stiffness of the ridge 50 is maintained. The serration 46 is prevented from serving as a starting point of wear. The tire 2 can improve the wear resistance. From this viewpoint, the inclination angle β is more preferably not less than 30 degrees.

By setting the inclination angle β of the side surface 54 to not greater than 50 degrees, the narrow shallow grooves 56 formed by the plurality of ridges 50 can effectively contribute to improvement of the drainage performance of the tire 2. The tire 2 can improve the wet performance. From this viewpoint, the inclination angle β is more preferably not greater than 40 degrees.

As shown in FIG. 5, the top 52 of the ridge 50 is located on the radially inner side of the land 48. Although not shown, a position of the top 52 of the ridge 50 may coincide with a position of the land 48 in the radial direction. In this tire 2, the position of the top 52 of the ridge 50 coincides with the position of the land 48 in the radial direction, or the top 52 of the ridge 50 is located on the radially inner side of the land 48. As a result, an excessive increase in the ground-contact pressure in the serrations 46 is suppressed. The ground-contact pressure distribution of the land portion 16 is formed by a uniform distribution without bias. The tire 2 can improve the wear resistance while suppressing the decrease in the wet performance. From this point of view, the position of the top 52 of the ridge 50 preferably coincides with the position of the land 48 in the radial direction, or the top 52 of the ridge 50 is preferably located on the radially inner side of the land 48.

In FIG. 5, a double-headed arrow TL is a distance from the land 48 to the top 52 of the ridge 50. The distance TL is measured along a normal line of the land 48.

As described above, it is preferable that the position of the top 52 of the ridge 50 coincides with the position of the land 48 in the radial direction, or that the top 52 of the ridge 50 is located on the radially inner side of the land 48. That is, the distance TL from the land 48 to the top 52 of the ridge 50 is preferably not less than 0 mm or more. From the viewpoint of achieving both the wet performance and the wear resistance of the tire 2, the distance TL is preferably not greater than 2.0 mm, more preferably not greater than 1.5 mm, and still more preferably not greater than 1.0 mm.

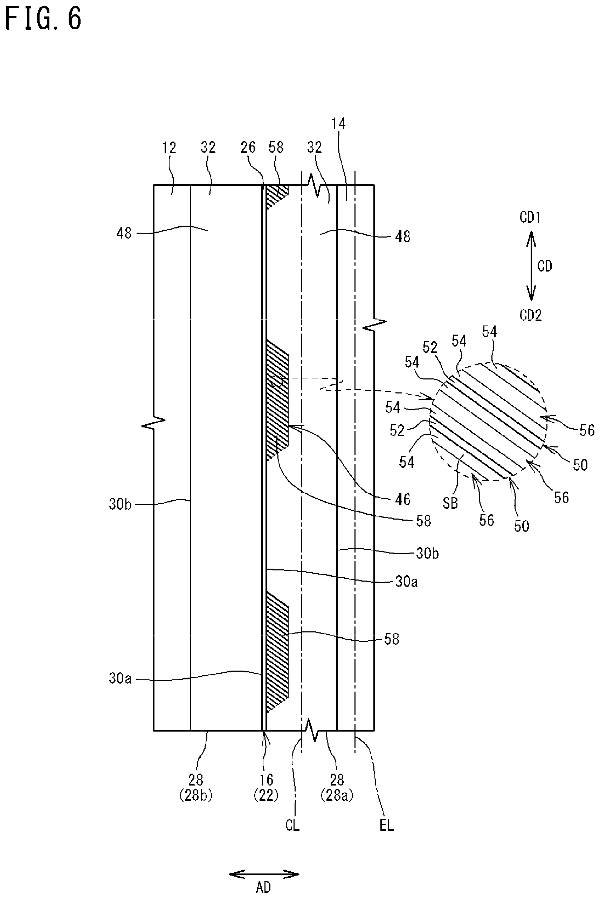

FIG. 6 shows a modification of the serration 46. The serration 46 includes a plurality of serration portions 58 arranged in the circumferential direction. The serration portions 58 are disposed at predetermined intervals in the circumferential direction. The serration 46 of Fig. 6 intermittently extend in the circumferential direction.

Each of the serration portions 58 has a shape that is long in the circumferential direction and short in the axial direction. Each of the serration portions 58 shown in FIG. 6 has an isosceles trapezoidal shape, but the serration portion 58 may have a parallelogram shape or a rectangular shape.

In the serration 46 of FIG. 6, each of the plurality of serration portions 58 constituting the serration 46 includes the above-described plurality of ridges 50. In other words, each of the plurality of serration portions 58 includes the plurality of narrow shallow grooves 56 arranged in parallel. The serration portion 58 is formed of a surface having irregularities. The serration portion 58 reduces a contact area of the narrow land portion 28.

The serration 46 shown in FIG. 6 is also located between the width center CL of the narrow land portion 28 and the first edge 30a of the narrow land portion 28. The serration 46 is located near the circumferential sub groove 26. By providing the serration 46, a contact area in the vicinity of a center of the land portion 16 is reduced. The ground-contact pressure in the vicinity of the center of the land portion 16 increases. The ground-contact pressure in the vicinity of the edges 16E of the land portion 16 relatively decreases. As a result, a ground-contact pressure distribution of the land portion 16 is formed by a uniform distribution without bias.

The serration 46 in FIG. 6 can effectively adjust the ground-contact pressure distribution of the land portion 16 by changing a length of the serration portions 58. The serration 46 can effectively contribute to forming the ground-contact pressure distribution of the land portion 16 by a uniform distribution without bias. The tire 2 can improve the wear resistance while suppressing the decrease in the wet performance. From this viewpoint, it is preferable that the serration 46 includes the plurality of serration portions 58 arranged in the circumferential direction, and that each of the plurality of serration portions 58 includes the plurality of ridges 50.

From the viewpoint of effectively adjusting the ground-contact pressure distribution of the land portion 16, the serration 46 provided on the top 32 of the narrow land portion 28 is preferably the serration 46 extending intermittently in the circumferential direction rather than the serration 46 extending continuously in the circumferential direction.

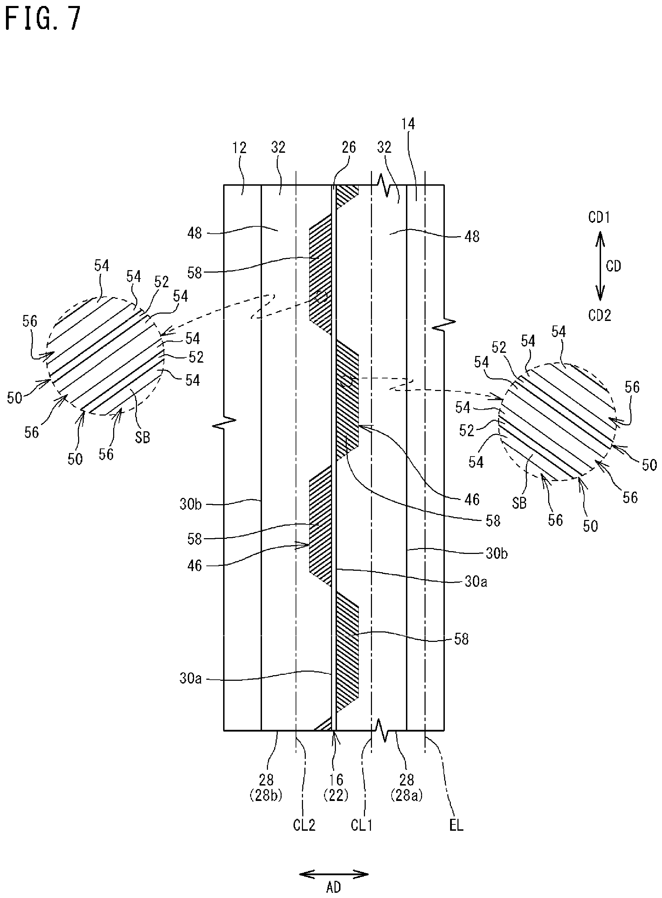

FIG. 7 shows a modification of the land portion 16 provided with the serration 46. In FIG. 7, an alternate long and short dash line CL1 represents a width center of the first narrow land portion 28a. An alternate long and short dash line CL2 represents a width center of the second narrow land portion 28b.

In the land portion 16 shown in FIG. 7, the top 32 each of the first narrow land portion 28a and the second narrow land portion 28b includes the serration 46 and the land 48. The serration 46 includes the plurality of ridges 50 described above. The serration 46 of the first narrow land portion 28a reduces the contact area of the first narrow land portion 28a, and the serration 46 of the second narrow land portion 28b reduces the contact area of the second narrow land portion 28b.

As shown in FIG. 7, the serration 46 of the first narrow land portion 28a is located between the width center CL1 of the first narrow land portion 28a and the first edge 30a of the first narrow land portion 28a. In the second narrow land portion 28b, the serration 46 is located between the width center CL2 of the second narrow land portion 28b and the first edge 30a of the second narrow land portion 28b. The serration 46 of the first narrow land portion 28a and the serration 46 of the second narrow land portion 28b are located near the circumferential sub groove 26. By providing the serration 46 in each of the first narrow land portion 28a and the second narrow land portion 28b, the contact area in the vicinity of the center of the land portion 16 is effectively reduced. The ground-contact pressure in the vicinity of the center of the land portion 16 increases. The ground-contact pressure in the vicinity of the edges 16E of the land portion 16 relatively decreases. The increase and decrease allow the land portion 16 to have a uniform ground-contact pressure distribution without bias. Increasing the volume of the land portion 16 to increase the stiffness of the land portion 16 in order to improve the wear resistance, and providing the circumferential sub groove 26 in the land portion 16 in order to improve the wet performance, which is decreased due to the increase in the volume of the land portion 16, can effectively contribute to achieving both the wet performance and the wear resistance of the tire 2. The tire 2 can improve the wear resistance while suppressing the decrease in the wet performance. From this viewpoint, it is preferable that the top 32 of each of the first narrow land portion 28a and the second narrow land portion 28b includes the serration 46 and the land 48, that in the first narrow land portion 28a, the serration 46 is located between the width center CL1 of the first narrow land portion 28a and the first edge 30a of the first narrow land portion 28a, that in the second narrow land portion 28b, the serration 46 is located between the width center CL2 of the second narrow land portion 28b and the first edge 30a of the second narrow land portion 28b, and that the serration 46 of each of the first narrow land portion 28a and the second narrow land portion 28b includes a plurality of ridges 50.

In particular, as compared with the case where the top 32 of any one of the first narrow land portion 28a and the second narrow land portion 28b of the narrow land portion 28 includes the serration 46 and the land 48, in the case where both the tops 32 of the first narrow land portion 28a and the second narrow land portion 28b each include the serration 46 and the land 48, the ground-contact pressure distribution of the land portion 16 can be formed by a more uniform distribution without bias. From this viewpoint, it is more preferable that instead of the case where the top 32 of any one of the first narrow land portion 28a and the second narrow land portion 28b of the narrow land portion 28 includes the serration 46 and the land 48, both the tops 32 of the first narrow land portion 28a and the second narrow land portion 28b each include the serration 46 and the land 48.

When both the tops 32 of the first narrow land portion 28a and the second narrow land portion 28b include the serrations 46, as shown in FIG. 7, a direction of the ridges 50 in the serration 46 of the first narrow land portion 28a is preferably opposite to a direction of the ridges 50 in the serration 46 of the second narrow land portion 28b.

As shown in FIG. 7, the serrations 46 of the first narrow land portion 28a and the second narrow land portion 28b each include a plurality of the serration portions 58 arranged in the circumferential direction. Each of the serrations 46 of the first narrow land portion 28a and the second narrow land portion 28b intermittently extends in the circumferential direction. Each of the plurality of serration portions 58 constituting the serrations 46 of the first narrow land portion 28a and the second narrow land portion 28b includes the above-described plurality of ridges 50. The serration portions 58 of the first narrow land portion 28a and the serration portions 58 of the second narrow land portion 28b can contribute to reduction of the contact area. Since the serration 46 of the first narrow land portion 28a and the serration 46 of the second narrow land portion 28b are located near the circumferential sub groove 26, it is possible to effectively contribute to increasing the ground-contact pressure in the vicinity of the center of the land portion 16 and relatively decreasing the ground-contact pressure in the vicinity of the edges 16E of the land portion 16. Moreover, the ground-contact pressure distribution of the land portion 16 can be effectively adjusted by changing a length of each of the serration portions 58. In the tire 2, the serration 46 provided in each of the first narrow land portion 28a and the second narrow land portion 28b can more effectively contribute to forming the ground-contact pressure distribution of the land portion 16 by a uniform distribution without bias. The tire 2 can improve the wear resistance while suppressing the decrease in the wet performance. From this viewpoint, when each of the first narrow land portion 28a and the second narrow land portion 28b has the serration 46, it is preferable that each of the serrations 46 of the first narrow land portion 28a and the second narrow land portion 28b has the plurality of serration portions 58 arranged in the circumferential direction, and that each of the plurality of serration portions 58 has the plurality of ridges 50.

In the land portion 16 shown in FIG. 7, the serration portions 58 of the first narrow land portion 28a and the serration portions 58 of the second narrow land portion 28b are alternately arranged in the circumferential direction. The land portion 16 can effectively adjust the ground-contact pressure distribution. In the tire 2, the serration 46 provided in each of the first narrow land portion 28a and the second narrow land portion 28b can help the land portion 16 to have a uniform ground-contact pressure distribution without bias. The tire 2 can improve the wear resistance while suppressing the decrease in the wet performance. From this viewpoint, when the serration 46 of each of the first narrow land portion 28a and the second narrow land portion 28b includes the plurality of serration portions 58 arranged in the circumferential direction, it is preferable that the serration portions 58 of the first narrow land portion 28a and the serration portions 58 of the second narrow land portion 28b are alternately arranged in the circumferential direction.

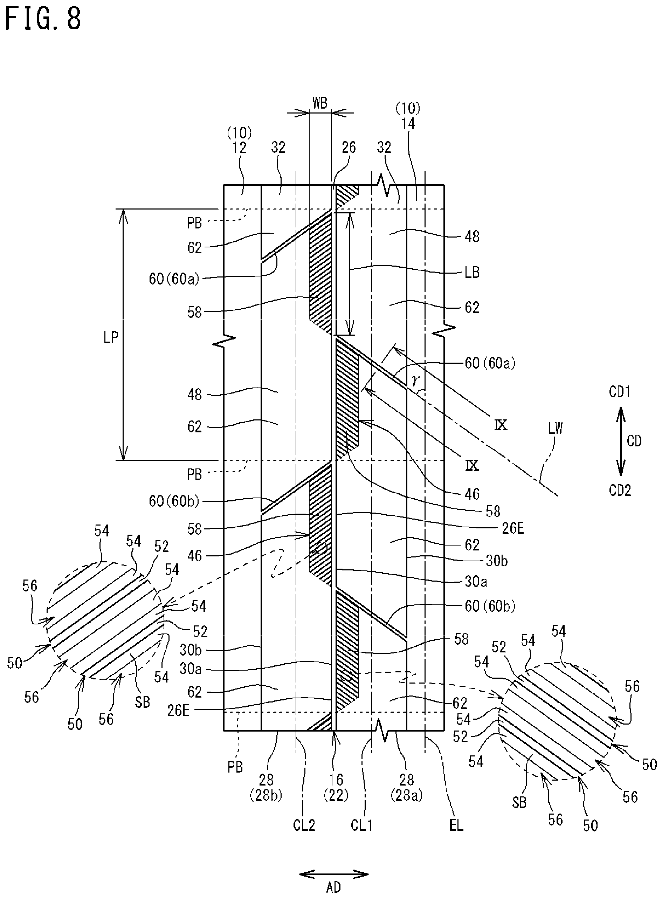

FIG. 8 shows a modification of the land portion 16 of FIG. 7. In the land portion 16 of FIG. 8, the top 32 of each of the first narrow land portion 28a and the second narrow land portion 28b includes the serration 46 and the land 48, and each of the first narrow land portion 28a and the second narrow land portion 28b includes a plurality of widthwise sipes 60.

The widthwise sipes 60 of the first narrow land portion 28a extend straight from the second edge 30b toward the first edge 30a of the first narrow land portion 28a. The widthwise sipes 60 of the second narrow land portion 28b extend straight from the second edge 30b toward the first edge 30a of the second narrow land portion 28b. In the tire 2, the widthwise sipes 60 of the first narrow land portion 28a and the second narrow land portion 28b are inclined with respect to the circumferential direction. The widthwise sipes 60 of the first narrow land portion 28a and the second narrow land portion 28b may extend in the axial direction.

As shown in FIG. 8, a direction of inclination of the widthwise sipes 60 of the second narrow land portion 28b is opposite to a direction of inclination of the widthwise sipes 60 of the first narrow land portion 28a. The direction of the inclination of the widthwise sipes 60 of the second narrow land portion 28b may be the same as the direction of the inclination of the widthwise sipes 60 of the first narrow land portion 28a.

In FIG. 8, the widthwise sipes 60 of the first narrow land portion 28a bridge between the second edge 30b and the first edge 30a of the first narrow land portion 28a. In other words, the widthwise sipes 60 are connected to both the center circumferential main groove 14 and the circumferential sub groove 26. The widthwise sipes 60 of the second narrow land portion 28b bridge between the second edge 30b and the first edge 30a of the second narrow land portion 28b. In other words, the widthwise sipes 60 are connected to both the shoulder circumferential main groove 12 and the circumferential sub groove 26. The widthwise sipes 60 may be connected to the second edges 30b of the narrow land portion 28 from the viewpoint of drainage performance, and may not be connected to the first edges 30a, that is, the circumferential sub groove 26. In this case, from the viewpoint that the widthwise sipes 60 can effectively exhibit the function, a distance from the widthwise sipes 60 to the circumferential sub groove 26 is preferably not greater than 3.2 mm.

In the tire 2, an end of each of the widthwise sipes 60 on each of the second edge 30b sides of the narrow land portion 28 is located on the second circumferential direction side with respect to an end of the widthwise sipe 60 on the first edge 30a side of the narrow land portion 28 in the circumferential direction. The end of the widthwise sipe 60 on the second edge 30b side of the narrow land portion 28 may be located on the first circumferential side with respect to the end of the widthwise sipe 60 on the first edge 30a side of the narrow land portion 28 in the circumferential direction.

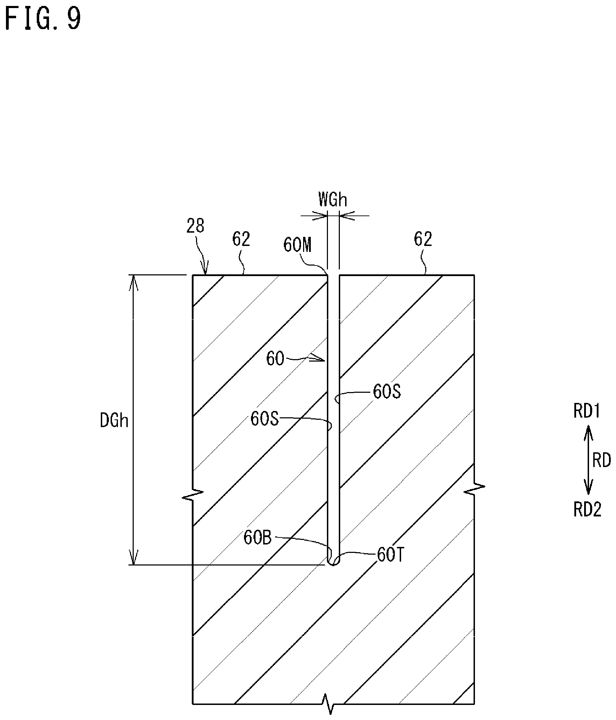

FIG. 9 shows a cross-section of the widthwise sipe 60 of the first narrow land portion 28a. Although not shown, the widthwise sipe 60 of the second narrow land portion 28b has a same cross-sectional shape as the cross-sectional shape of the widthwise sipe 60 of the first narrow land portion 28a. A main constitution of the widthwise sipe 60 will be described on the basis of the cross-section of the widthwise sipe 60 of the first narrow land portion 28a shown in FIG. 9.

The widthwise sipe 60 extends straight in a length direction and a depth direction thereof. The widthwise sipe 60 is a two-dimensional sipe. The widthwise sipe 60 has a pair of wall surfaces 60S including a groove opening 60M and a bottom surface 60B including a groove bottom 60T.

In FIG. 9, a double-headed arrow WGh is a groove width of the widthwise sipe 60 at the groove opening 60M. A double-headed arrow DGh is a groove depth of the widthwise sipe 60. The groove width WGh of the widthwise sipe 60 is less than 1.0 mm. The widthwise sipe 60 is the described-above sipe.

In each of the first narrow land portion 28a and the second narrow land portion 28b, the plurality of widthwise sipes 60 are arranged at predetermined intervals in the circumferential direction. As a result, a plurality of blocks 62 are formed in each of the first narrow land portion 28a and the second narrow land portion 28b. In other words, each of the blocks 62 is located between the two adjacent widthwise sipes 60. In the land portion 16 of FIG. 8, one block 62 includes one serration portion 58.

Also in the land portion 16 in FIG. 8, the serration 46 provided in each of the first narrow land portion 28a and the second narrow land portion 28b can effectively contribute to forming the ground-contact pressure distribution of the land portion 16 by a uniform distribution without bias. The widthwise sipe 60 functions as an edge component. Even if the tread 4 wears, the tire 2 can maintain good wet performance. As described above, the widthwise sipe 60 is a sipe. The pair of wall surfaces 60S of the widthwise sipe 60 comes into contact with each other when the narrow land portion 28 comes into contact with the road surface and is deformed. Thus, the adjacent blocks 62 support each other. A decrease in stiffness of the narrow land portion 28 is suppressed. The tire 2 can maintain good wear resistance. The tire 2 can improve the wear resistance while suppressing the decrease in the wet performance. From this viewpoint, it is preferable that the serration 46 of each of the first narrow land portion 28a and the second narrow land portion 28b includes the plurality of serration portions 58 arranged in the circumferential direction, each of the plurality of serration portions 58 includes the plurality of ridges 50, each of the first narrow land portion 28a and the second narrow land portion 28b includes the plurality of widthwise sipes 60 extending from the second edge 30b of each of the first narrow land portion 28a and the second narrow land portion 28b toward the first edge 30a of each of the first narrow land portion 28a and the second narrow land portion 28b, a portion between the two adjacent widthwise sipes 60 is the block 62 in each of the first narrow land portion 28a and the second narrow land portion 28b, and the block 62 includes the one serration portion 58.

Although not shown, in the tire 2, of the first narrow land portion 28a and the second narrow land portion 28b, the top 32 of the first narrow land portion 28a may include the serration 46 and the land 48, and also the first narrow land portion 28a may include the plurality of widthwise sipes 60. Of the first narrow land portion 28a and the second narrow land portion 28b, the top 32 of the second narrow land portion 28g may include the serration 46 and the land 48, and also the second narrow land portion 28b may include the plurality of widthwise sipes 60. From the viewpoint that the tire 2 can effectively improve the wear resistance while effectively suppressing a decrease in wet performance, it is preferable that the top 32 of each of the first narrow land portion 28a and the second narrow land portion 28b includes the serration 46 and the land 48, and that each of the first narrow land portion 28a and the second fine land portion 28b includes the plurality of widthwise sipes 60.

As shown in FIG. 8, the plurality of widthwise sipes 60 of the first narrow land portion 28a and the plurality of widthwise sipes 60 of the second narrow land portion 28b are arranged in a in a staggered manner in the circumferential direction. As a result, the serration portions 58 and the widthwise sipes 60 can effectively contribute to suppressing the decrease in the wet performance and improving the wear resistance. The tire 2 can effectively improve the wear resistance while effectively suppressing the decrease in the wet performance. From this viewpoint, when each of the first narrow land portion 28a and the second narrow land portion 28b includes the plurality of widthwise sipes 60, the plurality of widthwise sipes 60 of the first narrow land portion 28a and the plurality of widthwise sipes 60 of the second narrow land portion 28b are preferably arranged in a in a staggered manner in the circumferential direction.

When the circumferential sub groove 26 corresponds to the sipe, the groove width WGh of each of the widthwise sipes 60 is preferably the same as the groove width WGs of the circumferential sub groove 26 or narrower than the groove width WGs of the circumferential sub groove 26. In other words, a ratio WGh/WGs of the groove width WGh of the widthwise sipe 60 to the groove width WGs of the circumferential sub groove 26 is preferably not greater than 100%. As a result, an influence of the stiffness on the narrow land portion 28 by the widthwise sipes 60 is suppressed. The stiffness of the narrow land portion 28 is appropriately maintained. The tire 2 can maintain good wear resistance. From this viewpoint, the ratio WGh/WGs is more preferably not greater than 95%. From the viewpoint that the widthwise sipes 60 can contribute to the improvement of the drainage performance, the ratio WGh/WGs is preferably not less than 75%, and more preferably not less than 80%.

A ratio DGh/DGm of the groove depth DGh of the widthwise sipe 60 to the groove depth DGm of the circumferential main groove 10 is preferably not less than 70% and not greater than 90%.

By setting the ratio DGh/DGm to not less than 70%, the widthwise sipes 60 can sufficiently exhibit a function thereof until the tire 2 reaches an end state of wear in which replacement with a new tire 2 is necessary. The tire 2 can suppress the decrease in the wet performance. From this viewpoint, the ratio DGh/DGm is more preferably not less than 75%.

By setting the ratio DGh/DGm to not greater than 90%, an influence of the widthwise sipes 60 on the stiffness of the narrow land portion 28 is suppressed. Since the narrow land portion 28 has an appropriate stiffness, the tire 2 can improve the wear resistance. From this viewpoint, the ratio DGs/DGm is more preferably not greater than 80%.

In FIG. 8, an alternate long and short dash line LW is a center line of the widthwise sipe 60, and indicates a direction in which the widthwise sipe 60 extends. The center line LW of the widthwise sipe 60 intersects with the equator plane. In other words, the widthwise sipe 60 is inclined with respect to the circumferential direction. An angle γ is an angle formed by the center line LW of the widthwise sipe 60 and the alternate long and short dash line EL representing the equator plane. The angle γ is an angle formed by the widthwise sipe 60 with respect to the circumferential direction. The angle γ is also referred to as an inclination angle of the widthwise sipe 60.

The inclination angle γ of the widthwise sipe 60 is preferably not less than 30 degrees and not greater than 90 degrees. As a result, the widthwise sipe 60 can effectively contribute to the improvement of the drainage performance of the tire 2, and can effectively function as an edge component. The tire 2 can improve the wet performance. From this viewpoint, the inclination angle γ of the widthwise sipe 60 is more preferably not less than 45 degrees and not greater than 90 degrees.

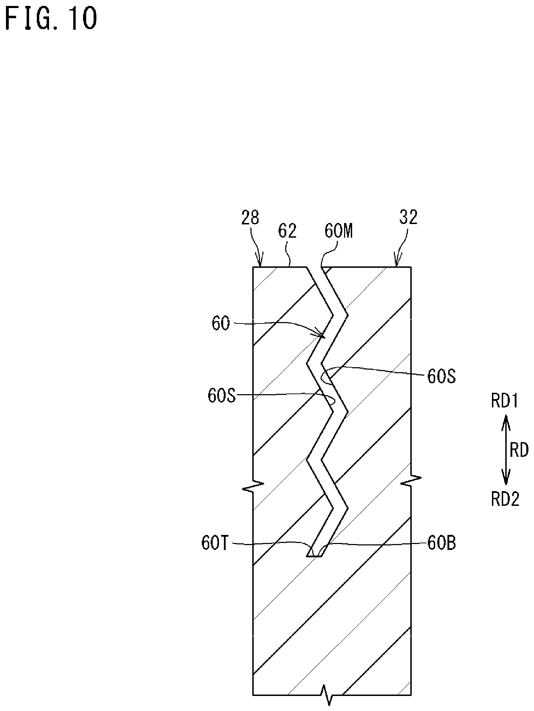

FIG. 10 shows a modification of the widthwise sipe 60. The widthwise sipe 60 extends in a zigzag in a depth direction. Although not shown, the widthwise sipe 60 also extends in a zigzag manner in a length direction thereof. The widthwise sipe 60 extends in a zigzag in the length direction and the depth direction. The widthwise sipe 60 shown in FIG. 10 is a three-dimensional sipe.

A pair of wall surfaces 60 of the three-dimensional type widthwise sipe 60 effectively mesh with each other as compared with the pair of wall surfaces 60S of the two-dimensional type widthwise sipe 60 shown in FIG. 9. Deformation of the narrow land portion 28 is effectively suppressed. The three-dimensional type widthwise sipe 60 can effectively contribute to the improvement of the wear resistance. Form this viewpoint, the widthwise sipe 60 preferably extends in a zigzag in the length direction and the depth direction. In other words, the widthwise sipe 60 is preferably a three-dimensional sipe.

In FIG. 8, a length indicated by a double-headed arrow LB is a length of the serration portion 58. The length LB is represented by a circumferential distance from an end on the first circumferential direction side to an end on the second circumferential direction side of the serration portion 58. A length indicated by an axial double-headed arrow WB is a width of the serration portion 58. The width of the serration portion 58 is represented by an axial distance from an end of the serration portion 58 on the first edge 30a side of the narrow land portion 28 to an end of the serration portion 58 on the second edge 30b side of the narrow land portion 28. The width of the serration portion 58 is also the width of the serration 46.

A ratio WB/WL of the width WB of the serration portion 58 to the width WL of the land portion 16 is preferably not less than 10%. As a result, the serration portion 58 can contribute to forming the ground-contact pressure distribution of the land portion 16 by a uniform distribution without bias, and improving the drainage performance. The tire 2 can maintain good wet performance. From this viewpoint, the ratio WB/WL is more preferably not less than 13% or more.

The ratio WB/WL is preferably not greater than 25%. Also in this case, the serration portion 58 can contribute to forming the ground-contact pressure distribution of the land portion 16 by a uniform distribution without bias. Since the end of the serration portion 58 on the second edge 30b side of the narrow land portion 28 is disposed away from the second edge 30b of the narrow land portion 28, an increase in ground-contact pressure at the second edge 30b of the narrow land portion 28 is suppressed. The tire 2 can suppress the occurrence of uneven wear. From this viewpoint, the ratio WB/WL is more preferably not greater than 23%.

The tread pattern of the tire 2 is formed by repeating a unit pattern in the circumferential direction. The unit pattern of the tread pattern is also called a pitch pattern. The tread pattern is formed by combining a plurality of pitch patterns. A length indicated by a double-headed arrow LP in FIG. 8 is a length of the pitch pattern. A dotted line PB represents a boundary of the pitch pattern.

A ratio LB/LP of the length LB of the serration portion 58 to the length LP of the pitch pattern is preferably not less than 30%. As a result, the serration portion 58 can contribute to forming the ground-contact pressure distribution of the land portion 16 by a uniform distribution without bias, and improving the drainage performance. The tire 2 can maintain good wet performance. From this viewpoint, the ratio LB/LP is more preferably not less than 35%.

The ratio LB/LP is preferably not greater than 55%. Also in this case, the serration portion 58 can contribute to forming the ground-contact pressure distribution of the land portion 16 by a uniform distribution without bias. Occurrence of uneven wear is suppressed. The tire 2 can maintain good wear resistance. From this viewpoint, the ratio LB/LP is more preferably not greater than 50%.

As shown in FIG. 8, the serration portion 58 is located between the two widthwise sipes 60 arranged in the circumferential direction. In the present invention, of the two widthwise sipes 60 arranged in the circumferential direction, a widthwise sipe 60a located on the first circumferential direction side of the serration portion 58 is also referred to as a first widthwise sipe. A widthwise sipe 60b located on the second circumferential direction side of the serration portion 58 is also referred to as a second widthwise sipe.

The serration portion 58 is connected to the first widthwise sipe 60a at the end thereof on the first circumferential direction side. The end of the serration portion 58 on the second circumferential direction side is disposed away from the second widthwise sipe 60b. The end of the serration portion 58 on the first circumferential direction side may be disposed away from the first widthwise sipe 60a. In this case, the serration portion 58 may be connected to the second widthwise sipe 60b at the end on the second circumferential direction side. From the viewpoint that providing the serration portions 58 and the widthwise sipes 60 in each of the first narrow land portion 28a and the second narrow land portion 28b can effectively contribute to both the wet performance and the wear resistance, it is preferable that each of the serration portions 58 is connected to the first widthwise sipe 60a at the end on the first circumferential direction side, and the end on the second circumferential direction side of the serration portion 58 is disposed away from the second widthwise sipe 60b. In this case, the serration portion 58 of the first narrow land portion 28a is preferably located between the widthwise sipe 60 of the first narrow land portion 28a and the widthwise sipe 60 of the second narrow land portion 28b in the circumferential direction, and the serration portion 58 of the second narrow land portion 28b is preferably located between the widthwise sipe 60 of the second narrow land portion 28b and the widthwise sipe 60 of the first narrow land portion 28a in the circumferential direction.

As described above, the serration portion 58 in FIG. 8 is connected to the widthwise sipe 60 located on the first circumferential direction side. In the tire 2, the direction of the ridges 50 provided in the serration portion 58 coincides with the direction of the widthwise sipe 60 to which the serration portion 58 is connected. The serration portion 58 may be provided with the ridges 50 such that the direction of the ridges 50 intersects the direction of the widthwise sipe 60. The direction of the widthwise sipe 60 to which the serration portion 58 is connected and the direction of the ridges 50 provided in the serration portion 58 are appropriately determined in accordance with the specifications of the tire 2.

In the heavy duty tire, the ground-contact pressure of the crown portion tends to be higher than the ground-contact pressure of the shoulder portion. The crown portion is subject to wear. A ground-contact length of the crown portion is longer than a ground-contact length of the shoulder portion. Water tends to be retained in the crown portion. In terms of drainage, the crown portion is at a disadvantage compared to the shoulder portion.

However, in this tire 2, for example, as shown in FIG. 1, the main land portion 20 located between the two shoulder land portions 18, in other words, the main land portion 20 located in the crown portion includes the first narrow land portion 28a and the second narrow land portion 28b separated by the circumferential sub groove 26, and the top 32 of the first narrow land portion 28a includes the serration 46 described above. The ground-contact pressure in the vicinity of the center of the main land portion 20 increases, and the ground-contact pressures in the vicinity of the edges of the main land portion 20 relatively decrease. As a result, a ground-contact pressure distribution of the main land portion 20 is formed by a uniform distribution without bias. The main land portion 20 can contribute to improvement of wear resistance in the crown portion. In addition, the circumferential sub groove 26 provided in the main land portion 20 can sufficiently exhibit its function. The tire 2 can improve the wear resistance while suppressing the decrease in the wet performance. From this viewpoint, the tread 4 of the tire 2 preferably includes at least the one main land portion 20 between the two shoulder land portions 18, and the main land portion 20 preferably includes the first narrow land portion 28a and the second narrow land portion 28b described above. When the plurality of main land portions 20 are located between the two shoulder land portions 18, it is more preferable that of the plurality of main land portions 20 located between the two shoulder land portions 18, the main land portion 20 located on the equator plane or the main land portion 20 closest to the equator plane includes the first narrow land portion 28a and the second narrow land portion 28b described above, and it is still more preferable that all the main land portions 20 located between the two shoulder land portions 18 each include the first narrow land portion 28a and the second narrow land portion 28b described above.

When the main land portion 20 includes the first narrow land portion 28a and the second narrow land portion 28b described above, the main land portion 20 is preferably provided with the serrations 46 and the lands 48 as in the land portion 16 shown in FIG. 4, FIG. 6, FIG. 7, or FIG. 8, and more preferably provided with the serrations 46 and the lands 48 as in the land portion 16 shown in FIG. 8.

As is apparent from the above description, according to the present invention, it is possible to obtain a heavy duty tire capable of achieving improvement in wear resistance while suppressing a decrease in the wet performance.

### INDUSTRIAL APPLICABILITY

The technique described above that can achieve improvement in wear resistance while suppressing a decrease in wet performance can be applied to various tires.

### REFERENCE SIGNS LIST

2 tire
4 tread
10 circumferential main groove
16 land portion
20 main land portion
22 crown land portion
26 circumferential sub groove
28, 28a, 28b narrow land portion
30, 30a, 30b edge of narrow land portion
32 top of narrow land portion
46 serration
48 land
50 ridge
52 top
56 narrow shallow groove
58 serration portion
60 widthwise sipe

## Claims

1. A heavy duty tire comprising a tread located on a radially outermost side and extending in a circumferential direction,
wherein the tread includes a plurality of land portions separated by a circumferential main groove,
at least one of the land portions includes a first narrow land portion and a second narrow land portion separated by a circumferential sub groove,
of two edges of each of the first narrow land portion and the second narrow land portion, an edge on a side of the circumferential sub groove is a first edge and an edge on another side is a second edge,
a top of the first narrow land portion includes a serration having irregularities and a land having no irregularities,
the serration is located between a width center of the first narrow land portion and the first edge of the first narrow land portion,
the serration includes a plurality of ridges, and
a narrow shallow groove is located between two adjacent ridges of the plurality of ridges.

2. The heavy duty tire according to claim 1, wherein
the serration includes a plurality of serration portions arranged in the circumferential direction, and
each of the plurality of serration portions includes the plurality of ridges.

3. The heavy duty tire according to claim 2, wherein
the first narrow land portion includes a plurality of widthwise sipes extending from the second edge of the first narrow land portion toward the first edge of the first narrow land portion,
the plurality of widthwise sipes are arranged in the circumferential direction,
a portion between two adjacent widthwise sipes is a block, and
the block includes one of the serration portions.

4. The heavy duty tire according to claim 1, wherein
a top of each of the first narrow land portion and the second narrow land portion includes the serration and the land,
in the first narrow land portion, the serration is located between the width center of the first narrow land portion and the first edge of the first narrow land portion,
in the second narrow land portion, the serration is located between a width center of the second narrow land portion and the first edge of the second narrow land portion, and
the serration of each of the first narrow land portion and the second narrow land portion includes the plurality of ridges.

5. The heavy duty tire according to claim 4, wherein
the serration of each of the first narrow land portion and the second narrow land portion includes a plurality of serration portions arranged in the circumferential direction,
each of the plurality of serration portions includes the plurality of ridges, and
the serration portion of the first narrow land portion and the serration portion of the second narrow land portion are alternately arranged in the circumferential direction.

6. The heavy duty tire according to claim 4, wherein
the serration of each of the first narrow land portion and the second narrow land portion includes a plurality of serration portions arranged in a circumferential direction,
each of the plurality of serration portions includes the plurality of ridges,
each of the first narrow land portion and the second narrow land portion includes a plurality of widthwise sipes extending from the second edge of each of the first narrow land portion and the second narrow land portion toward the first edge of each of the first narrow land portion and the second narrow land portion, and
in each of the first narrow land portion and the second narrow land portion, a portion between two adjacent widthwise sipes is a block, and
the block includes one of the serration portions.

7. The heavy duty tire according to claim 6, wherein the plurality of widthwise sipes of the first narrow land portion and the plurality of widthwise sipes of the second narrow land portion are arranged in a staggered manner in the circumferential direction.

8. The heavy duty tire according to any one of claims 3, 6, and 7, wherein a ratio of a groove depth of each of the widthwise sipes to a groove depth of the circumferential main groove is not less than 70% and not greater than 90%.

9. The heavy duty tire according to any one of claims 3, and 6 to 8, wherein each of the widthwise sipes extends in a zigzag in a length direction and a depth direction.

10. The heavy duty tire according to any one of claims 1 to 9, wherein the circumferential sub groove is located at a center of the land portion.

11. The heavy duty tire according to any one of claims 1 to 10, wherein a ratio of a groove depth of the circumferential sub groove to a groove depth of the circumferential main groove is not less than 70% and not greater than 90%.

12. The heavy duty tire according to any one of claims 1 to 11, wherein the narrow shallow groove is connected to the circumferential sub groove at an end on a side of the circumferential sub groove.

13. The heavy duty tire according to any one of claims 1 to 12, wherein a position of a top of each of the plurality of ridges coincides with a position of the land in a radial direction, or the top of each of the plurality of ridges is located on a radially inner side of the land.

14. The heavy duty tire according to any one of claims 1 to 13, wherein,
of the plurality of land portions, two land portions located on an axially outermost side are shoulder land portions, and a land portion located between the two shoulder land portions is a main land portion, and
at least one of the main land portions includes the first narrow land portion and the second narrow land portion separated by the circumferential sub groove.

15. The heavy duty tire according to any one of claims 1 to 14, wherein,
a pair of wall surfaces of the circumferential sub groove comes into contact with each other when the tread comes into contact with the road surface and is deformed, and
a pair of wall surfaces of the circumferential main groove does not come into contact with each other when the tire comes into contact with the road surface and is deformed.
